# EUROPÄISCHE PATENTSCHRIFT

(11) **EP 2 296 929 B1**
(45) Veröffentlichungstag und Bekanntmachung des Hinweises auf die Patenterteilung: **10.04.2013**
(21) Anmeldenummer: 08803046.5
(22) Anmeldetag: 15.08.2008
(51) Int. Cl.: B60K 17/10, F16H 47/04

(54) **FAHRZEUG MIT EINER GETRIEBEVORRICHTUNG MIT EINEM VARIATOR, EINER PLANETENGETRIEBEEINRICHTUNG UND EINER SCHALTGETRIEBEEINRICHTUNG**
VEHICLE WITH A TRANSMISSION DEVICE, COMPRISING A VARIATOR, A PLANETARY GEAR UNIT AND A MANUAL TRANSMISSION UNIT
VÉHICULE AVEC UN DISPOSITIF D'ENGRENAGE COMPORTANT UN VARIATEUR, UN ENGRENAGE PLANÉTAIRE ET UN ENGRENAGE DE PASSAGE DE VITESSES

(30) Priorität: 16.07.2008 DE 102008040448
(43) Veröffentlichungstag der Anmeldung: 23.03.2011
(73) Patentinhaber: ZF Friedrichshafen AG, 88038 Friedrichshafen (DE)
(72) Erfinder: GRAD, Karl, 94161 Ruderting (DE); POHLENZ, Jürgen, 88214 Ravensburg (DE); BAILLY, Gerhard, 88046 Friedrichshafen (DE); RATZMANN, Thomas, 88074 Meckenbeuren (DE)
(86) Internationale Anmeldenummer: PCT/EP2008/060754
(87) Internationale Veröffentlichungsnummer: WO 2010/006658

(56) Entgegenhaltungen:
- WO-A-99/01681
- DE-A1- 1 625 030
- DE-A1- 1 952 966
- DE-A1- 4 223 296
- DE-A1-102006 025 348
- DE-B- 1 159 772
- JP-A- 2002 235 831
- US-A- 3 371 734
- US-A- 4 471 669
- US-A1- 2003 162 618
- US-B1- 6 616 559

## Beschreibung

Die Erfindung betrifft ein Fahrzeug mit einer Getriebevorrichtung mit einem Variator, einer Planetengetriebeeinrichtung und einer Schaltgetriebeeinrichtung gemäß der im Oberbegriff des Patentanspruches 1 näher definierten Art.

Ein Fahrzeug mit einem hydrostatisch-mechanischen Traktorengetriebe mit einem stufenlosen hydrostatischen Antrieb ist aus der DE 10 2006 025 348 A1 bekannt. Der hydrostatische Antrieb weist eine von einem Verbrennungsmotor angetriebene hydrostatische Pumpe und einen von der Pumpe angetriebenen Hydromotor auf. Die Pumpe und der Hydromotor sind über ein einziges, gemeinsames Schwenkteil zwangsgekoppelt und derart verstellbar, dass die Pumpe zwischen einem minimalen Winkel und einem maximalen Winkel verschwenkbar ist, während zugleich der Motor synchron von einem maximalen Schwenkwinkel zu einem minimalen Winkel verschwenkt. Die Pumpe ist für eine einzige Förderrichtung des Volumenstroms ausgelegt. Ein mechanisches Bereichsgetriebe mit mehreren Schaltstufen, die über eine Kupplung schaltbar sind, ist nachgeschaltet.

Darüber hinaus ist aus der DE 19 52 966 A eine Getriebevorrichtung mit Leistungsverzweigung bekannt, welche einen Variator, einen Doppelplanetenradsatz und eine Schaltgetriebeeinrichtung zur Darstellung mehrerer Fahrbereiche umfasst. Die Pumpen- und die Motoreinrichtung des als Hydrostateinrichtung ausgeführten Variators sind über ein gemeinsames Joch verstellbar.

Die US 2003/162618 A1 zeigt weiterhin ein Fahrzeug nach dem Oberbegriff des Anspruchs 1.

Der vorliegenden Erfindung liegt die Aufgabe zugrunde, die aus dem Stand der Technik bekannten Getriebevorrichtungen derart weiterzubilden, dass diese auch in Fahrzeugen mit seitlicher Bauraumbegrenzung durch eine vordefinierte Rahmenbauweise sowie mit einer Bauraumbegrenzung nach oben durch Fahrzeugaufbauten und nach unten durch eine gewünschte Bodenfreiheit einbaubar sind, ohne bestehende Fahrzeugsysteme konstruktiv umgestalten zu müssen,

Erfindungsgemäß wird diese Aufgabe mit einem Fahrzeug mit einer Getriebevorrichtung mit den Merkmalen des Patentanspruches 1 gelöst.

Bei dem erfindungsgemäßen Fahrzeug mit einer Getriebevorrichtung, mit einem Variator, einer Planetengetriebeeinrichtung und einer Schaltgetriebeeinrichtung, wobei der Variator länger als breit und tief ist, ist der Variator in seiner Längserstreckung in Einbaulage im Fahrzeug wenigstens annähernd diagonal orientiert.

Damit ist die Getriebevorrichtung des Fahrzeugs nach der Erfindung in den seitlich durch eine definierte Rahmenbauweise des Fahrzeuges sowie nach oben und unten durch Fahrzeugaufbauten und/oder eine gewünschte Bodenfreiheit begrenzt zur Verfügung stehenden Bauraum ohne bestehende Fahrzeugsysteme konstruktiv ändern zu müssen, einbaubar.

Bei einer vorteilhaften Weiterbildung der Getriebevorrichtung des Fahrzeugs nach der Erfindung ist der Variator wenigstens bereichsweise unterhalb eines Ölstandes des Ölsumpfes angeordnet, um den Variator auf besonders einfache Art und Weise ausgehend von einer Fahrzeugunterseite demontieren zu können. Um im Betrieb Verlustleistungen durch Ölplanschen der rotierenden Bauteile des Variators im Betrieb der Getriebevorrichtung nach der Erfindung zu vermeiden, ist der unterhalb des Ölstandes liegende Bereich des Variators durch Schotteinrichtungen vom Hydraulikfluid des Ölsumpfes abgeschottet.

Alternativ hierzu ist der Variator bei einer vorteilhaften Ausführungsform der Getriebevorrichtung nach der Erfindung zur Vermeidung von Planschverlusten oberhalb eines Ölstandes des Ölsumpfes angeordnet.

Bei einer vorteilhaften Weiterbildung der Getriebevorrichtung nach der Erfindung ist der Variator in Einbaulage zwischen einer Antriebsmaschine des Fahrzeugs und der Planetengetriebeeinrichtung sowie der Schaltgetriebeeinrichtung angeordnet. Damit ist der Variator auf einfache Art und Weise durch Abziehen des Variators in Vorwärtsfahrtrichtung aus einem Fahrzeug ausbaubar, wenn seitlich keine Zugänglichkeit zum Getriebegehäuse besteht. Darüber hinaus ist der Variator auch einfach ausgehend von der Unterseite des Fahrzeuges bei entsprechender Zugänglichkeit ohne zusätzliches Demontieren von Fahrzeugteilen oder einem Kippen einer Fahrzeugkabine ausbaubar.

Bei in radialer Richtung jeweils einen geringen Bauraumbedarf aufweisenden Ausführungen der Getriebevorrichtung nach der Erfindung ist entweder der Variator zwischen dem Planetenradsatz und der Schaltgetriebeeinrichtung oder die Schaltgetriebeeinrichtung zwischen dem Planetenradsatz und dem Variator angeordnet.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei zugunsten der Übersichtlichkeit in der Beschreibung der Ausführungsbeispiele für bau- und funktionsgleiche Bauteile dieselben Bezugszeichen verwendet werden.

Es zeigt:
- Fig. 1: ein Räderschema eines ersten Ausführungsbeispieles der erfindungsgemäßen Getriebevorrichtung;
- Fig. 2: eine schematisierte dreidimensionale Seitenansicht der Getriebevorrichtung gemäß Fig. 1;
- Fig. 3: ein Räderschema eines zweiten Ausführungsbeispieles der erfindungsgemäßen Getriebevorrichtung;
- Fig. 4: ein Räderschema eines Ausführungsbeispieles einer Getriebevorrichtung nicht nach der Erfindung; und
- Fig. 5: ein Räderschema eines Ausführungsbeispieles einer Getriebevorrichtung nicht nach der Erfindung.

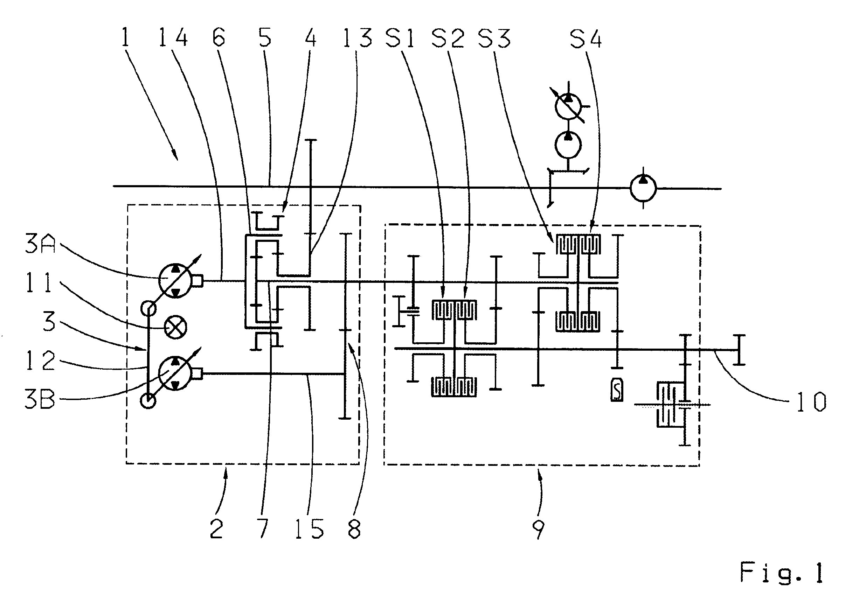

Fig. 1 zeigt ein Räderschema einer Getriebevorrichtung 1 mit stufenloser Übersetzungsverstellung, welches beispielsweise in landwirtschaftlichen Fahrzeugen einsetzbar ist. Über die Getriebevorrichtung 1 sind vorliegend drei Übersetzungsbereiche bzw. Fahrbereiche für Vorwärtsfahrt und ein Übersetzungsbereich für Rückwärtsfahrt darstellbar, innerhalb welchen die Übersetzung der Getriebevorrichtung 1 stufenlos verstellbar ist.

Die stufenlose Verstellung der Getriebeübersetzung wird über einen stufenlosen Antriebssatz 2 ermöglicht, der einen Variator 3 und eine Planetengetriebeeinrichtung 4 umfasst. Mittels der Planetengetriebeeinrichtung 4 wird der nur begrenzt einstellbaren Drehzahl einer Getriebeantriebswelle 5, die mit einer Antriebsmaschine eines Fahrzeugs gekoppelt ist, die stufenlose Drehzahlverstellbarkeit des Variators 3 überlagert. Als Ergebnis dieser Überlagerung stehen im Bereich der Planetengetriebeeinrichtung 4 zwei Wellen 6, 7 der Planetengetriebeeinrichtung 4 mit stufenlos veränderbarer Drehzahl zur Verfügung, wobei die erste Welle 6 als Planetenträger der Planetengetriebeeinrichtung 4 ausgeführt ist und mit einer verstellbaren Pumpeneinrichtung 3A des Variators 3 gekoppelt ist. Die zweite Welle 7 ist ein Sonnenrad der Planetengetriebeeinrichtung 4, welche über eine Stirnradverzahnung 8 mit einer verstellbaren Motoreinrichtung 3B des Variators 3 in Wirkverbindung steht. Die Pumpeneinrichtung 3A und die Motoreinrichtung 3B des als Hydrostateinrichtung ausgeführten Variators 3 sind jeweils in Schrägachsenbauweise ausgebildet und im Bereich einer Schwenkachse 11 über ein gemeinsames Joch 12 verschwenkbar.

Der stufenlose Antriebssatz 2 ist mit einer Schaltgetriebeeinrichtung 9 gekoppelt, die in Abhängigkeit der Leistungsfähigkeit des Variators 3 und auch in Abhängigkeit der konstruktiven Ausgestaltung der Planetengetriebeeinrichtung 4 ausgebildet ist. Über die Schaltgetriebeeinrichtung 9 erfolgt die Leistungsübertragung vom stufenlosen Antriebssatz 2 in Richtung einer Getriebeabtriebswelle 10. Darüber hinaus werden im Bereich der Schaltgetriebeeinrichtung 9 die geforderten Abtriebsdrehzahlen in den verschiedenen Übersetzungsbereichen dargestellt.

Die Schaltgetriebeeinrichtung 9 ist mit vier reibschlüssigen Schaltelementen S1 bis S4 ausgestaltet, wobei bei geschlossenem ersten Schaltelement S1 der Fahrbereich für Rückwärtsfahrt in der Getriebevorrichtung 1 eingelegt ist. Die Schaltelemente S2 bis S4 sind zur Darstellung der drei Fahrbereiche für Vorwärtsfahrt vorgesehen.

Ein zweites Sonnenrad 13 der Planetengetriebeeinrichtung 4 ist mit der Getriebeantriebswelle 5 verbunden. Die Variatorwellen 14 und 15 sind somit jeweils an eine Welle 6, 7 der Planetengetriebeeinrichtung 4 gekoppelt, die keine direkte Verbindung mit der Getriebeantriebswelle 5 aufweisen. Darüber hinaus sind die Variatorwellen 14 und 15 achsparallel zu den Wellen 6, 7 der Planetengetriebeeinrichtung 4 angeordnet.

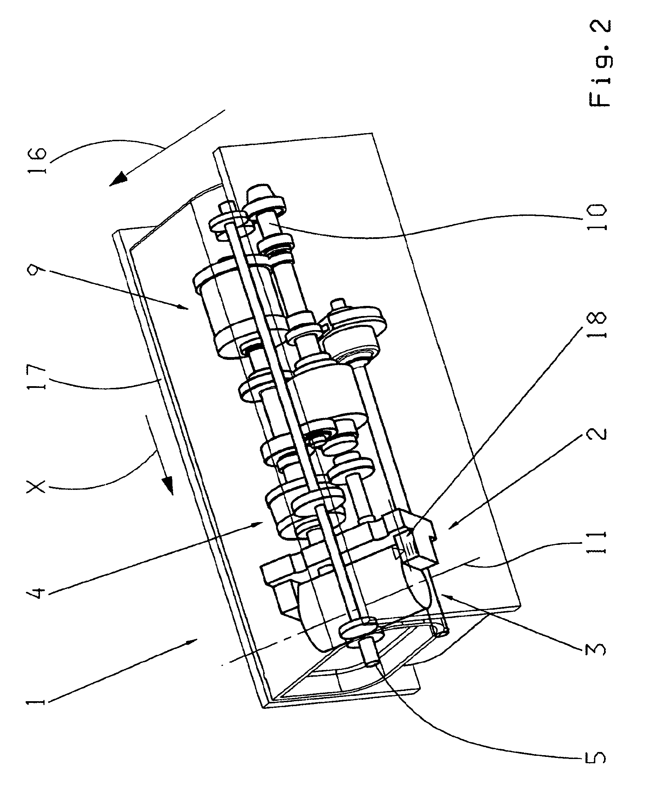

Der Variator 3 ist länger als breit und tief ausgeführt und in seiner Längserstreckung in seiner in Fig. 2 dargestellten Einbaulage im Fahrzeug wenigstens annähernd diagonal in einem Fahrzeugrahmen 17 angeordnet. Damit wird der vorliegend durch die Bauweise des Fahrzeugrahmens 17 seitlich begrenzte und zur Verfügung stehende Bauraum, der zusätzlich nach oben in Richtung einer Fahrzeughochachse 16 und unten durch Fahrzeugaufbauten bzw. eine gewünschte Bodenfreiheit für den Einbau des Variators 3 bzw. der Getriebevorrichtung 1 zur Verfügung steht, vollständig ausgenutzt.

Zusätzlich ist der Variator 3 in Vorwärtsfahrtrichtung des Fahrzeuges, die durch den Pfeil X in Fig. 2 näher gekennzeichnet ist, vor der Planetengetriebeeinrichtung 4 und der Schaltgetriebeeinrichtung 9 angeordnet. Die Getriebevorrichtung 1 ist einerseits in radialer Richtung durch einen geringen Bauraumbedarf und andererseits durch eine größere axiale Länge gekennzeichnet. Zudem ist der Variator 3 aufgrund seiner in Vorwärtsfahrtrichtung X vorderen Anordnung einfach zu demontieren, wobei der Variator 3 in Abhängigkeit der jeweiligen Ausführung nach vorne, in Bezug auf eine Fahrzeugoberseite nach unten oder in Richtung der Fahrzeughochachse 16 nach oben aus dem Fahrzeugrahmen 17 entnehmbar ist, der neben weiteren Fahrzeugkomponenten den für die Getriebevorrichtung 1 zur Verfügung stehenden Bauraum im Fahrzeug begrenzt.

Ist der Variator 3 wie im vorliegenden Fall zumindest bereichsweise unterhalb eines Ölstandes 18 der Getriebevorrichtung 1 angeordnet, ist der Variator 3 durch geeignete Schotteinrichtungen von dem in einem nicht näher dargestellten Ölsumpf der Getriebevorrichtung 1 angeordneten Hydraulikfluid abzuschotten, um im Betrieb der Getriebevorrichtung 1 sogenannte Planschverluste und somit eine Beeinträchtigung des Gesamtwirkungsgrades der Getriebevorrichtung 1 auf einfache Art und Weise zu vermeiden.

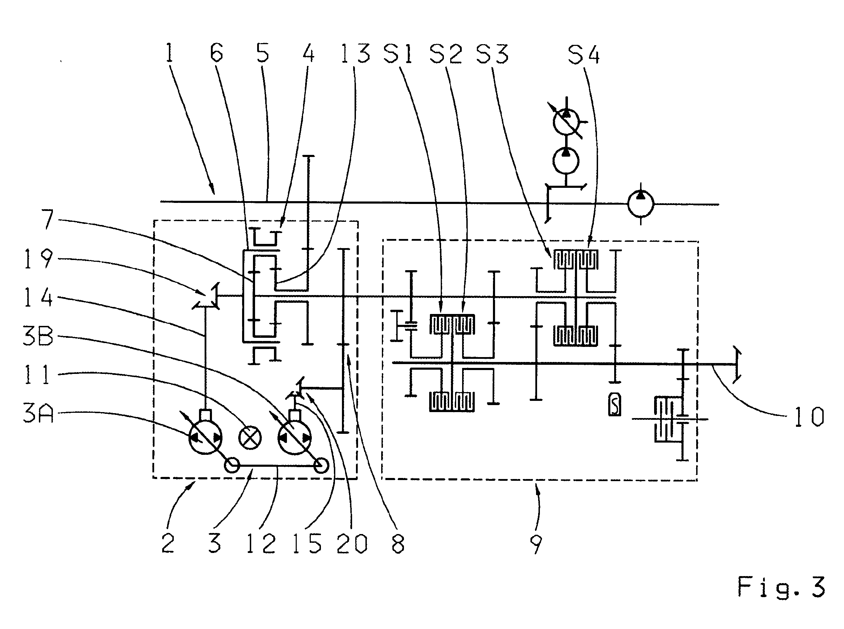

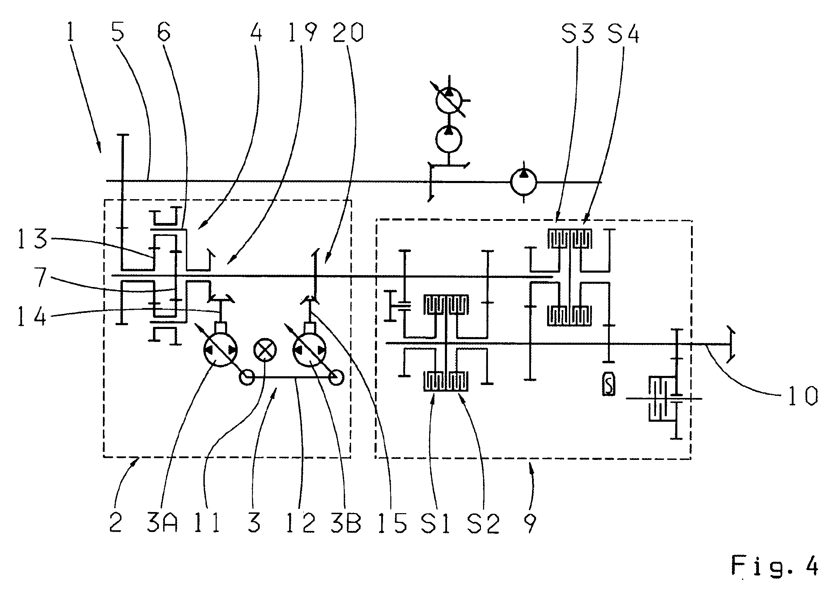

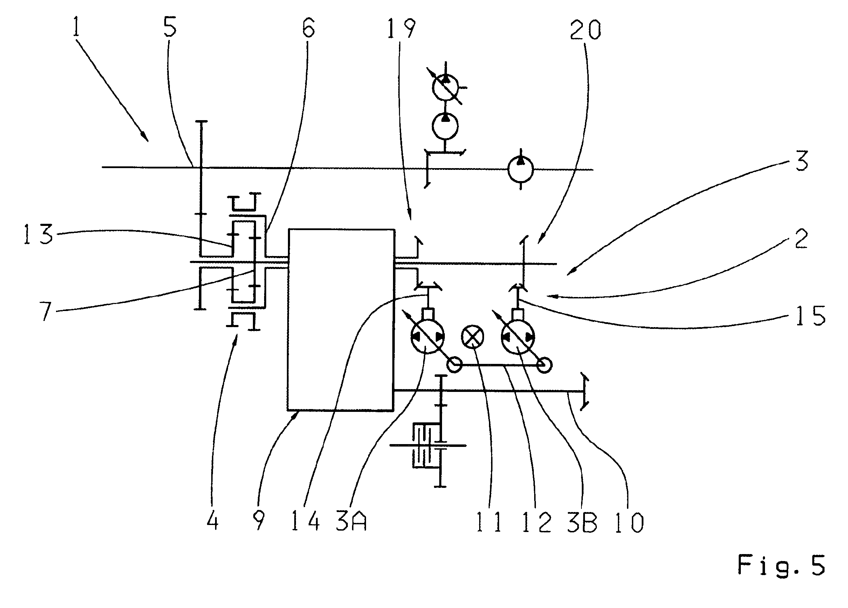

In Fig. 3 ist ein Räderschema eines zweiten Ausführungsbeispieles der Getriebevorrichtung 1 dargestellt, bei welcher die beiden Variatorwellen 14 und 15 jeweils über sogenannte Winkeltriebe 19 und 20 mit den Wellen 6 und 7 der Planetengetriebeeinrichtung 4 verbunden sind, wobei die Winkeltriebe 19, 20 jeweils durch miteinander kämmende Kegelräder bzw. Kegelradverzahnungen gebildet sind. Die Variatorwellen 14 und 15 sind rechtwinklig zu den Wellen 6 und 7 der Planetengetriebeeinrichtung 4 angeordnet. Die Anbindung des Variators 3 über die beiden Winkeltriebe 19 und 20 an die Planetengetriebeeinrichtung 4 bietet auf einfache Art und Weise die Möglichkeit, den Variator 3 in den in Fig. 4 und Fig. 5 dargestellten räumlichen Positionen anzuordnen.

Im Vergleich zu dem in Fig. 1 und Fig. 2 dargestellten ersten Ausführungsbeispiel, bei welchen der Variator 3 über Stirnradverzahnungen mit dem den Wellen 6, 7 der Planetengetriebeeinrichtung 4 angebunden ist, weist das zweite Ausführungsbeispiel der Getriebevorrichtung 1 einen geringeren axialen Bauraumbedarf auf. Zusätzlich ist der Variator 3 während einer Demontage mit geringem Aufwand seitlich aus einer Steckverbindung und den Kegelradverzahnungen der Winkeltriebe 19 und 20 abziehbar ohne zuvor weitere Fahrzeugkomponenten demontieren zu müssen.

In Abhängigkeit des jeweils vorliegenden Anwendungsfalles besteht jedoch auch die Möglichkeit, den Variator in der in Fig. 1 und Fig. 2 dargestellten Anordnung über Winkeltriebe mit der Planetengetriebeeinrichtung zu verbinden.

Falls im Bereich des Getriebeeingangs der zur Verfügung stehende Bauraumbedarf für den Variator 3 nicht ausreichend ist, ist der Variator 3 in der in Fig. 4 dargestellten Art und Weise räumlich zwischen der Planetengetriebeeinrichtung 4 und der Schaltgetriebeeinrichtung 9 mit diagonaler Orientierung anordenbar oder in der in Fig. 5 dargestellten Art und Weise in Vorwärtsfahrtrichtung X räumlich hinter der Schaltgetriebeeinrichtung 9 positionierbar, so dass die Schaltgetriebeeinrichtung 9 zwischen der Planetengetriebeeinrichtung 4 und dem Variator 3 angeordnet ist und die Getriebevorrichtung 1 in Bezug auf eine Fahrzeugvorderachse in einem hinteren Bereich einen größeren radialen Bauraumbedarf aufweist.

### Bezugszeichen

- 1: Getriebevorrichtung
- 2: stufenloser Antriebssatz
- 3: Variator
- 3A: Pumpeneinrichtung
- 3B: Motoreinrichtung
- 4: Planetengetriebeeinrichtung
- 5: Getriebeantriebswelle
- 6: Welle, Planetenträger
- 7: Welle, Sonnenrad
- 8: Stirnradverzahnung
- 9: Schaltgetriebeeinrichtung
- 10: Getriebeabtriebswelle
- 11: Schwenkachse
- 12: Joch
- 13: zweites Sonnenrad
- 14, 15: Variatorwelle
- 16: Fahrzeughochachse
- 17: Fahrzeugrahmen
- 18: Ölstand
- 19, 20: Winkeltrieb
- S1 bis S4: Schaltelement
- X: Vorwärtsfahrtrichtung

## Patentansprüche

1. Fahrzeug mit einem Fahrzeugrahmen (17) und einer zwischen dem Fahrzeugrahmen (17) angeordneten Getriebevorrichtung (1) mit einer Getriebeantriebswelle (5) mit einem Variator (3), welcher als Hydrostateinrichtung mit einem Motor (3B) und einer Pumpe (3A) ausgeführt ist, einer Planetengetriebeeinrichtung (4) und einer Schaltgetriebeeinrichtung (9), wobei der Variator (3) länger als breit und tief ist, wobei der Variator (3) in seiner Längserstreckung in Einbaulage im Fahrzeug wenigstens annähernd diagonal in dem Fahrzeugrahmen (17) orientiert ist, und die Längserstreckung quer zur Vorwärtsfahrtrichtung verläuft und wobei der Variator (3) in Vorwärtsfahrtrichtung des Fahrzeugs vor der Planetengetriebeeinrichtung (4) und der Schaltgetriebeeinrichtung (9) angeordnet ist, **dadurch gekennzeichnet, dass** der Motor (3B) und die Pumpe (3A) jeweils in Schrägachsenbauweise ausgebildet sind und im Bereich einer Schwenkachse (11) über ein gemeinsames Joch (12) verschwenkbar sind und die Antriebswelle (5) mit der Planetengetriebeeinrichtung (4) wirkverbunden ist.

2. Fahrzeug nach Anspruch 1, **dadurch gekennzeichnet, dass** der Variator (3) wenigstens bereichsweise unterhalb eines Ölstands (18) des Ölsumpfes angeordnet und der unterhalb des Ölstands (18) liegende Bereich durch Schotteinrichtungen vom Hydraulikfluid abgeschottet ist.

3. Fahrzeug nach Anspruch 1, **dadurch gekennzeichnet, dass** der Variator oberhalb eines Ölstandes des Ölsumpfes angeordnet ist.

4. Fahrzeug nach einem der Ansprüche 1 bis 3, **dadurch gekennzeichnet, dass** der Variator (3) in Einbaulage räumlich zwischen einer Antriebsmaschine des Fahrzeuges und der Planetengetriebeeinrichtung (4) sowie der Schaltgetriebeeinrichtung (9) angeordnet ist.

## Claims

1. Vehicle with a vehicle frame (17) and with a transmission device (1) arranged between the vehicle frame (17), said transmission device having a transmission drive input shaft (5) with a variator (3) which is designed as a hydrostatic unit with a motor (3B) and a pump (3A), having a planetary gear set unit (4) and having a shift transmission unit (9), wherein the variator (3) is longer than it is wide and deep, wherein the variator (3), in its installation position in the vehicle, is oriented with its longitudinal extent at least approximately diagonally in the vehicle frame (17), and the longitudinal extent runs transversely with respect to the direction of forward travel, and wherein the variator (3) is arranged, in the direction of forward travel of the vehicle, in front of the planetary gear set unit (4) and the shift transmission unit (9), **characterized in that** the motor (3B) and the pump (3A) are in each case of oblique-axis construction and, in the region of a pivot axis (11), can be pivoted by means of a common yoke (12), and the drive input shaft (5) is operatively connected to the planetary gear set unit (4).

2. Vehicle according to Claim 1, **characterized in that** the variator (3) is arranged at least in regions below an oil level (18) of the oil sump, and the region situated below the oil level (18) is partitioned off from the hydraulic fluid by partition devices.

3. Vehicle according to Claim 1, **characterized in that** the variator is arranged above an oil level of the oil sump.

4. Vehicle according to one of Claims 1 to 3, **characterized in that** the variator (3), in the installation position, is arranged spatially between a drive machine of the vehicle and the planetary gear set unit (4) and the shift transmission unit (9).

## Revendications

1. Véhicule comprenant un châssis de véhicule (17) et un dispositif de transmission (1) disposé entre le châssis de véhicule (17), avec un arbre d'entraînement de transmission (5) avec un variateur (3) qui est réalisé sous forme de dispositif hydrostatique avec un moteur (3B) et une pompe (3A), un dispositif d'engrenage planétaire (4) et un dispositif de boîte de vitesses (9), le variateur (3) étant plus long que large et profond,
le variateur (3) étant orienté dans son étendue longitudinale dans la position d'installation dans le véhicule au moins approximativement en diagonale dans le châssis du véhicule (17), et l'étendue longitudinale s'étendant transversalement à la direction d'avance du véhicule et le variateur (3) étant disposé dans la direction d'avance du véhicule avant le dispositif d'engrenage planétaire (4) et le dispositif de boîte de vitesses (9), **caractérisé en ce que** le moteur (3B) et la pompe (3A) sont réalisés à chaque fois dans une construction à axes obliques, et peuvent pivoter dans la région d'un axe de pivotement (11) par le biais d'un joug commun (12) et l'arbre d'entraînement (5) étant en liaison fonctionnelle avec le dispositif d'engrenage planétaire (4).

2. Véhicule selon la revendication 1, **caractérisé en ce que** le variateur (3) est disposé au moins en partie en dessous d'un niveau d'huile (18) et la région se situant sous le niveau d'huile (18) étant cloisonnée par rapport au fluide hydraulique par des dispositifs de cloisonnement.

3. Véhicule selon la revendication 1, **caractérisé en ce que** le variateur est disposé au-dessus d'un niveau d'huile du carter d'huile.

4. Véhicule selon l'une quelconque des revendications 1 à 3, **caractérisé en ce que** le variateur (3) est disposé dans la position d'installation spatialement entre un moteur d'entraînement du véhicule et le dispositif d'engrenage planétaire (4) ainsi que le dispositif de boîte de vitesses (9).
